# EUROPEAN PATENT SPECIFICATION

(11) **EP 0 437 322 B1**
(45) Date of publication and mention of the grant of the patent: **18.05.1994**
(21) Application number: 91300056.8
(22) Date of filing: 04.01.1991
(51) Int. Cl.: B23P 11/02, B23P 19/02, B23Q 3/12, B24B 41/04, B23B 31/02

(54) **Spindle unit for a machine tool**
Spindel-Einheit für Werkzeugmaschine
Broche pour machine outil

(30) Priority: 08.01.1990 JP 2362/90; 19.09.1990 JP 251362/90
(43) Date of publication of application: 17.07.1991
(73) Proprietor: KABUSHIKI KAISHA MORI SEIKI SEISAKUSHO, Yamatokoriyamashi Nara (JP)
(72) Inventor: Yamaguchi, Yoshinori, Sakurai-shi, Nara (JP); Shino, Kentaro, Nara-shi, Nara (JP); Inada, Kiyoshi, Shiki-gun, Nara (JP); Hanaoka, Hiroshi, Kawasaki-shi, Kanagawa (JP)
(74) Representative: Purvis, William Michael Cameron

(56) References cited:
- EP-A- 0 197 890
- CH-A- 613 647
- DE-A- 2 453 504
- DE-U- 7 438 670
- DE-U- 8 519 794
- GB-A- 2 174 360

## Description

The invention relates to a tool-cramping device in a spindle unit for a machine tool.

It is accepted practice that for the spindle unit of a machine tool it is preferable to employ large-sized and tough bearings in order to enhance rigidity of a main spindle. Small-sized bearings are however required to suppress heat generation at high rotational speeds of the main spindle. Thus very rigid spindles can be used only at lower rotational speeds, while the other spindles designed for higher rotational speeds inevitably are of lower rigidity. In other words, the prior art has taught that aptitude for high rotational speeds and satisfactorily high rigidity cannot be given to the same main spindle.

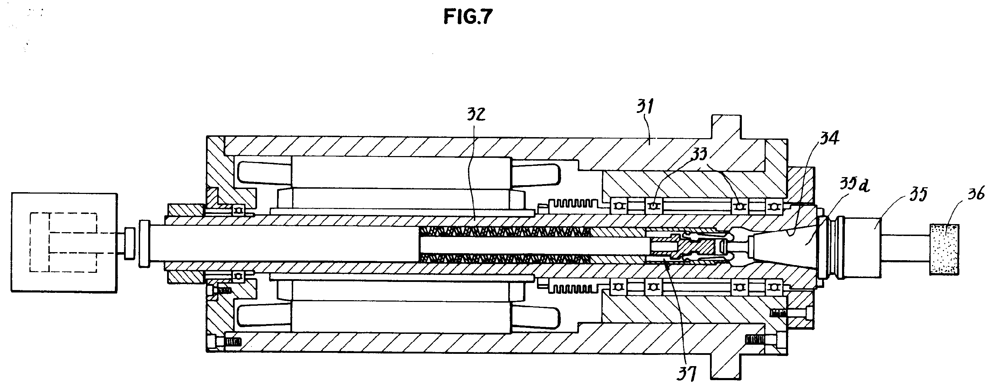

A spindle unit of previously proposed kind as shown in Figure 7 of the accompanying drawings comprises a main spindle 32 provided at its end with a means for cramping rotary tools and formed as a cylinder or hollow shaft rotatably supported by a spindle head 31 by way of bearings 33. Fitted in an axially extending bore of the cylinder is a tool-cramping device 37 as part of the means for cramping rotary tools. A tapered portion 34 is formed at a front end of the main spindle so as tightly to hold a rotary tool. In this example, a grindstone 36 is fixed to a tool holder 35 whose tapered portion 35a firmly engages with the tapered portion 34 of the main spindle. The tool holder 35 is pulled strongly into the main spindle 32.

The outer diameter of the main spindle 32 governs the size of the tapered portion 35a of tool holder 35 which can be used. Therefore, the spindle 32 will in general have such a large diameter that it is difficult to drive the spindle to rotate at high speed even with a reduced size of the bearings. If such a large main spindle 32 is forcibly rotated at high speed, then the bearings generate a considerable amount of heat, thereby not only seriously affecting manufacturing precision but also giving rise to the burning of and possible seizing of the bearings and the spindle. Further, the tool cramping device 37 in the axial bore of the main spindle 32 will in such an event unbalance the rotation thereof and cause "rocking rotation". As a result, there are produced undesirable vibration of and unpleasant noise from the apparatus.

In addition, the main spindle 32 has to be manufactured by two or more separate steps in order to form its inner hollow space, its tapered portion and other portions. Consequently, the spindle is likely to lose its rotational balance. In order to avoid such a problem by improving the precision of the spindle, a manufacture technique at an extraordinarily high level of precision will be required to produce the main spindle.

It will thus be apparent that the prior art spindle units have indeed been incapable of precisely machining high precision mechanical parts whereas there are increasing demands for higher precision in high-speed grinding and high-speed cutting.

Patent Specification DE-A-2453504 discloses a spindle unit including a main spindle, drive means therefor and mounting bearings, the main spindle at its front end, presenting a columnar lug for the attachment of a tool holding unit.

According to the invention there is provided a tool-cramping device in a spindle unit for a machine tool having a main spindle rotatably supported in a spindle head, the tool-cramping device being of such a structure that a rotary tool is replaceably held by a front end of the main spindle, the tool-cramping device comprising: an adapter disposed at the front end of the main spindle; a tool holder holding the rotary tool; and a columnar lug formed integral either with the adapter or with the tool holder; characterised in that a cylindrical bore is formed integral either with the tool holder or with the adapter and is to be shrink-fitted on the columnar lug, and a heating means and a cooling means are provided respectively to heat and cool whichever of the tool holder and the adapter comprises the cylindrical bore.

Such a construction permits the main spindle to be made highly rigid and to be rotated at high speeds, whereby mechanical parts can be ground or cut with high precision by rotating the main spindle at high speeds.

Preferably, whichever of the adapter or the tool holder has the cylindrical bore therein is made of a material having a coefficient of linear expansion higher than that of the material of which the other of the tool holder or the adapter is made.

Advantageously the adapter is separable from the main spindle and fixedly fitted on the front end thereof.

The bearings whereby the main spindle is rotatably supported in the spindle head can be made of ceramics or other material generating low heat. The main spindle may be formed of cemented carbide.

The heating and cooling means may be disposed either at the proximity of the front end of the spindle head, or alternatively on a tool transporter.

A vibrator may be employed to give tremor to the adapter or holder while the means is heating or cooling it, in order to facilitate tight engagement or smooth disengagement of the adapter with or from the tool holder.

It is also preferable to employ a pressing means for urging the tool holder towards the adapter so as surely to fit them together.

The spindle unit and the tool-cramping device therein constructed as described above can operate as follows. Firstly, the tool holder or adapter which has the columnar lug is caused to fit in the adapter or tool holder which has the cylindrical bore and is in a heated state. After that, the adapter or tool holder having the bore will be cooled down to be tightly connected to the tool holder or adapter due to the shrink fit. As a result, the rotary tool carried by the tool holder will be cramped by the main spindle.

To bring the tool holder or adapter having the columnar lug into its "uncramped" state, the other member which has the cylindrical bore is to be heated again. In such an uncramped state, the tool will be replaced with another tool.

The vibrator may be utilized to vibrate the tool holder or the adapter while the tool holder is being urged towards the adapter by the pressing means. Thus, the holder will be tightly secured to the adapter such that the shrink fit enhances high precision and high rigidity to the connection of said members.

It is further noted that the main spindle is preferably a solid shaft made of cemented carbide or other highly rigid material, and rotation balance can be excellent as a whole including the tool-cramping device which is secured to the front end of the main spindle and carries the rotary tool. Improved accuracy in changing tools can be obtained providing a higher rigidity. Further, any orientation work is not necessitated because the main spindle need not be stopped at a fixed position as was required in prior art apparatus.

The main spindle can be of a smaller diameter without impairing its rigidity since it is a generally solid shaft formed of very rigid material. The solid shaft need only be machined on its outer surface thereby simplifying the machining process to manufacture the main spindle. Rotational precision at high speeds can be excellent since the bearings can be of small size and be made of a suitable ceramics scarcely generating a significant amount of heat, and also since the rigidity and rotation balance including the tool-cramping device and the rotary tool carried thereby can be remarkably improved as mentioned above. Thus, higher rotational speeds and higher rigidity can be ensured at the same time. The main spindle can now be rotated at sufficiently high speeds to perform high precision grinding and cutting operations thereby enabling machining in the order of sub-micron metres. In an example wherein the spindle unit and tool-cramping device are used with grindstones, compound or multiple grinding works can be carried out at higher precision and at higher speeds. Heavy-duty grinding at high speeds will also be possible because a distance from the bearings of main spindle to the grindstones can be minimized due to the simple structure of adapter and tool holder so as to improve rigidity and safety, and because the cramping force is not impaired even at high rotational speeds. In addition, the adapter and tool holder in the tool-cramping device can be so simple in structure and capable of being manufactured at such low cost that throwaway grindstones may be utilised.

The invention is diagrammatically illustrated by way of example in the accompanying drawings, in which:-
Figure 1 is a horizontal cross section of principal portions of one embodiment of a spindle unit including a tool-cramping device according to the invention;
Figures 2 to 4 are horizontal and partial cross sections showing steps of cramping a tool in the spindle unit of Figure 1;
Figure 5 is a horizontal and partial cross section of principal portions of another embodiment of a spindle unit incorporating a tool-cramping device according to the invention;
Figure 6 is a horizontal and partial cross section of principal portions of a third embodiment of a spindle unit incorporating a tool-cramping device according to the invention;
Figure 7 is a horizontal cross section of principal portions of a spindle unit of previously proposed kind;
Figure 8(a) is a graph showing rotational precision in the apparatus of Figure 7;
Figure 8(b) is a graph showing rotational precision in a spindle unit incorporating a tool-cramping device according to the invention;
Figure 9(a) is a graph showing elongation in the axial direction and temperature rise of the main spindle in the apparatus of Figure 7; and;
Figure 9(b) is a further graph showing elongation in the axial direction and temperature rise of the main spindle in a spindle unit incorporating a tool-cramping device according to the invention.

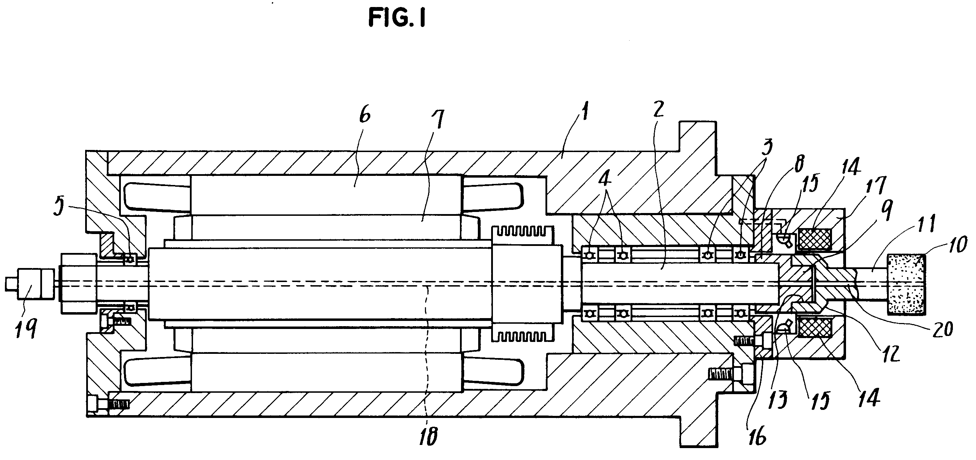

Referring to the drawings and firstly to Figure 1, a spindle head has a main spindle 2 mounted therein as a solid shaft which may be made of cemented carbide or any other appropriate hard metal. The main spindle 2 is rotatably supported by bearings 3, 4 and 5 in the spindle head 1, the bearings being made of an appropriate ceramics which generate a negligible amount of heat. An electric motor 6 mounted in the spindle heat 1 includes a rotor 7 which is directly connected to the main spindle 2 so as to drive it.

An adapter 8 is employed to attach a rotary tool 10 (as shown a grindstone) to the front end of the main spindle. A columnar lug 9 is integrally formed at a front portion of the adapter 8. A rear portion of the adapter is shrink fitted to the front end of the main spindle 2, the columnar lug 9 extending coaxially with the main spindle 2. The material Invar (which has a thermal expansion coefficient of 0.1 X 10⁻⁶), ceramics or other materials of low thermal expansion coefficients may be used to form the adapter 8.

A support shaft 11 supports the grindstone 10 and comprises at its rear end a tool holder 12. The tool holder 12 has a cylindrical bore 13 which is shrink-fitted to the columnar lug 9 of the adapter 8. The tool holder 12 is made of Nickel-Chromium steel (which has a thermal expansion coefficient of 11 x 10⁻⁶) and is integral with the support shaft 11.

A rapid heating device 14 comprises an electric heater, while a rapid cooling device 15 can jet cold air or cold water. The devices 14 and 15 are both secured to an annular bracket 17 which is fixed to and protrudes from a bearing retainer 16 disposed at the front end of the spindle head 1. The rapid heating and cooling devices 14 and 15 are positioned close to the adapter 8. To facilitate the cooling by the rapid cooling device 15, it may be useful to employ an assisting means comprising a passage 18 which penetrates a core portion centrally and axially of the main spindle 2, and through which cutting oil or cooling water can flow through a rotary joint 19. The cutting oil or cooling water will flow out on demand through a central bore 20 of the support shaft 11.

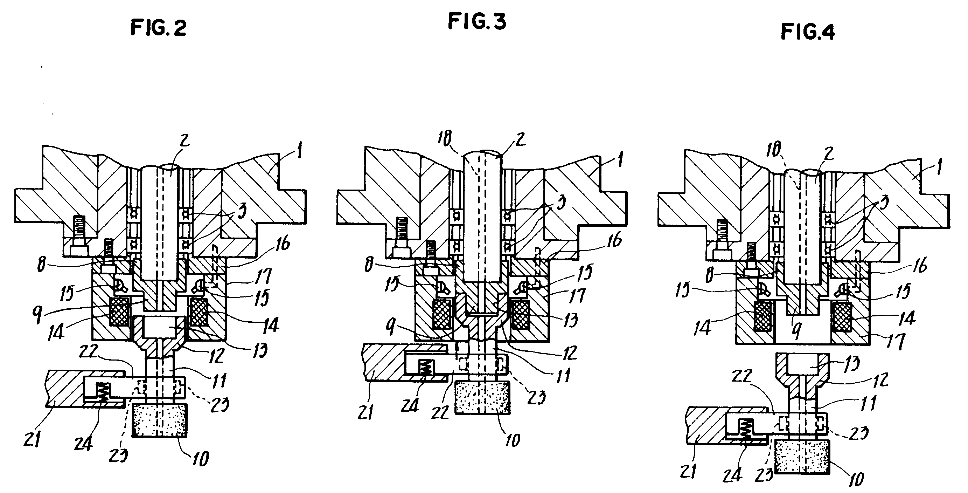

A transport arm 21 is a principal part of a tool transporter for the grindstone 10. As shown in Figure 2, the arm 21 comprises a finger 22 which is attached to an end of the arm 21 and can pick up out of a magazine (not shown) a selected one of several support shafts 11 respectively carrying a grindstone 10. The transport arm 21 thus brings the selected grindstone into the proximity of the front end of the main spindle 2 where the grindstones are changed. A vibrator 23 is incorporated in the finger 22 so as to vibrate the tool holder 12 through the support shaft 11 gripped by the finger 22.

Further, the finger 22 is connected to the arm 21 in such a manner that relative movement is allowed between them. A coiled spring 25 constantly urges the finger towards the main spindle. In detail, the finger movable relative to the arm and urged in this manner constitutes a pressing means by which the tool holder 12 gripped by the finger 22 is pressed to engage with the adapter 8 secured to the main spindle.

Figures 2 to 4 illustrate steps in the process of cramping the grindstone 10 by the tool-cramping device composed as described above.

At first as shown in Figure 2, the finger 22 of the transport arm 21 grips the support shaft 11 and thereby moves the grindstone 10 to the proximity of the front end of the main spindle where the grindstones are changed. While in such proximity the engaging portions of the adapter 8 and the tool holder 12 are cleaned. Then, the rapid heating device 14 heats the tool holder 12 to increase an inner diameter of the cylindrical bore 13 due to thermal expansion. The bore 13 can thus be engaged on the columnar lug 9 of the adapter 8. In order that the lug 9 may be tightly inserted in the bore 13, the vibrator 23 imparts vibration or tremor to the holder 12 through the support shaft 11 while at the same time the coiled spring 24 will cause the finger 22 to urge the holder against the adapter 8.

After such an engaging operation is completed, the rapid heating device 14 will stop heating the members and the rapid cooling device 15 will thereafter start to cool the holder 12. The thus cooled holder 12 is fixedly shrink-fitted onto the adapter 8 so that the grindstone 10 is cramped onto the front end of the main spindle 2. The vibrator 23 may operate also during this cooling step so as to impart vibration to the holder 12. The coiled spring 24 will force by means of the finger 22 the thus vibrated holder 12 onto the adapter 8 whereby the holder 12 and the adapter 8 will be perfectly engaged with each other at high precision and enhancing high rigidity (see Figure 3). Subsequently, the finger 22 of the transport arm 21 will release the support shaft 11 before leaving the main spindle 2 and permitting it to start its grinding operation.

To replace the grindstone 10 cramped on the main spindle 2 with another grindstone, the rapid heating device 14 is actuated again. The tool holder 12 of higher thermal expansion coefficient is thus heated to enlarge its cylindrical bore 13 so that the adapter 8 and the holder 12 become disengagable from each other, with the main spindle 2 thus uncramping the grindstone 10. Consequently, the finger 22 of the transport arm 21 grips the support shaft 11 and pulls it away from the main spindle in the axial direction thereof while the vibrator 23 is causing tremor to the holder 12 through the shaft 11. The cylindrical bore 13 of the holder 12 is disengaged in this manner from the columnar lug 9 of the adapter 8, and the grindstone 10 can be replaced by another one (see Figure 4).

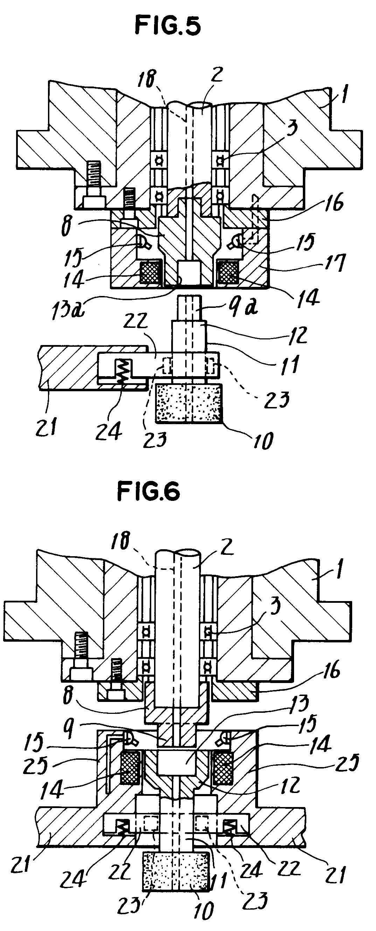

Although, in the embodiment described above, the adapter 8 attached to the main spindle 2 comprises the lug 9, with the holder 12 for the grindstone 10 thereby comprising the bore 13, it is quite possible, as shown in the second embodiment in Figure 5, for the adapter 8 to comprise a cylindrical bore 13a instead of the lug, and the holder 12 to comprise a columnar lug 9a in place of the bore. In this case, Invar, ceramics or other suitable material of low thermal expansion coefficient may be utilized to manufacture the support shaft 11 and the tool holder 12 having integral therewith the lug 9a. Correspondingly, Nickel-Chromium steel will be used to form the adapter comprising the bore 13a. It is preferable that, in order to prevent the main spindle 2 from being thermally deformed due to the heating of the adapter 8, the adapter be made longer than that in the first embodiment and be provided with cooling means such as heat-radiating fins.

Figure 6 shows a third embodiment wherein a pair of transport arms 21 and 21 are employed to face one another. Each arm 21 comprises a semicircular bracket 25 which integrally protrudes therefrom and has the rapid heating device 14 as well as the rapid cooling device 15 incorporated therein. Two fingers 22 and two corresponding coiled springs 24 are incorporated in the arms so as to form pressing means. Such a structure in this embodiment is advantageous in that the heating and cooling of the relevant members can be carried out during transportation of the rotary tools thereby improving efficiency in tool changing operations.

Comparative tests were conducted to compare the performance of a spindle unit including a tool-cramping device according to the invention as shown in Figure 1 with that of the previously proposed apparatus shown in Figure 7. Rotational precision (i.e., vibrational rotation) at high speeds as well as axial elongation and temperature rise of the main spindles were measured in the comparative tests. Results of the tests are as follows.

### (1) Rotational precision:

Vibration or rolling which accompanied the high-speed rotation of the rotary tools 10 and 36 was detected by means of two noncontacting sensors. One of the sensors was disposed on a machine table in a direction "X" (i.e., along an axis of abscissas), with the other sensor in a direction "Y" (i.e., along an axis of ordinates).

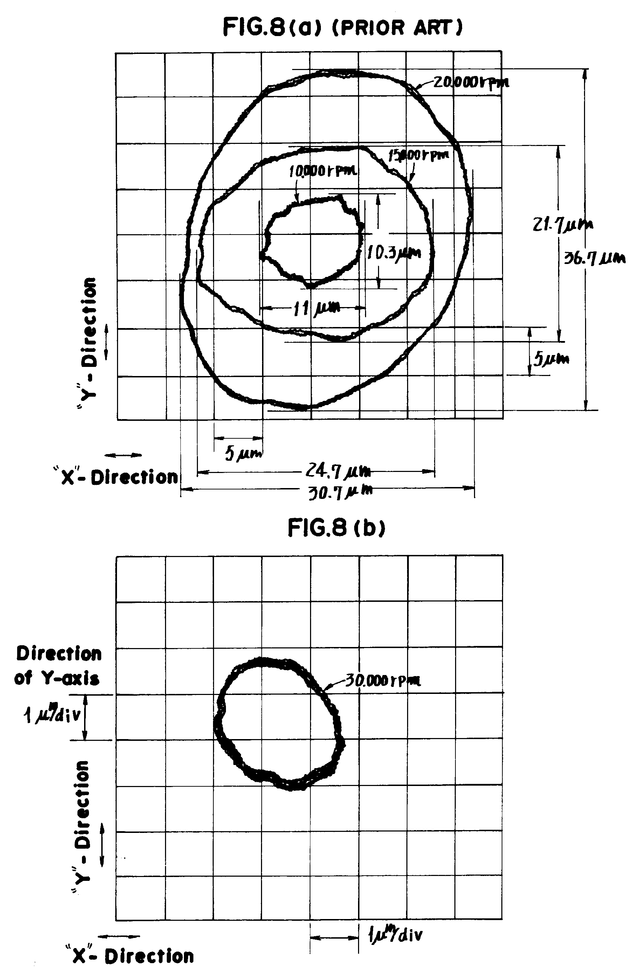

Figure 8(a) shows the test result obtained for the tool 36 in respect of the high-speed rotational precision. As will be seen from there, the vibration or rolling was 0.0307mm in the direction "X" and 0.0367mm in the direction "Y", for rotation at 20,000 rpm of the main spindle. It will be apparent that the rotational precision becomes noticeably worse above the speed of 15,000 rpm.

Figure 8(b) shows an improved high-speed rotational precision in the spindle unit including a tool-cramping device according to the invention. The vibration or rolling was observed to be 0.0028mm in the direction "X" and 0.0029mm in the direction "Y", even for rotation at 30,000 rpm of the main spindle. Thus, the vibration of the main spindle in the spindle unit was one tenth or less of that in the prior art spindle, despite such a very high rotational speed raised by 10,000 rpm. This result shows that the machining operations of higher precision at higher speeds are possible with a spindle unit including a tool-cramping device according to the invention.

### (2) Longitudinal elongation and temperature rise of the main spindles:

The elongation of the main spindles in their longitudinal direction (i.e., direction "Z") was measured by means of another noncontacting sensor disposed to face the rotary tool 10 or 36 rotating at high speeds. A thermocouple was attached to the front cover of the main spindle so as to measure the temperature rise.

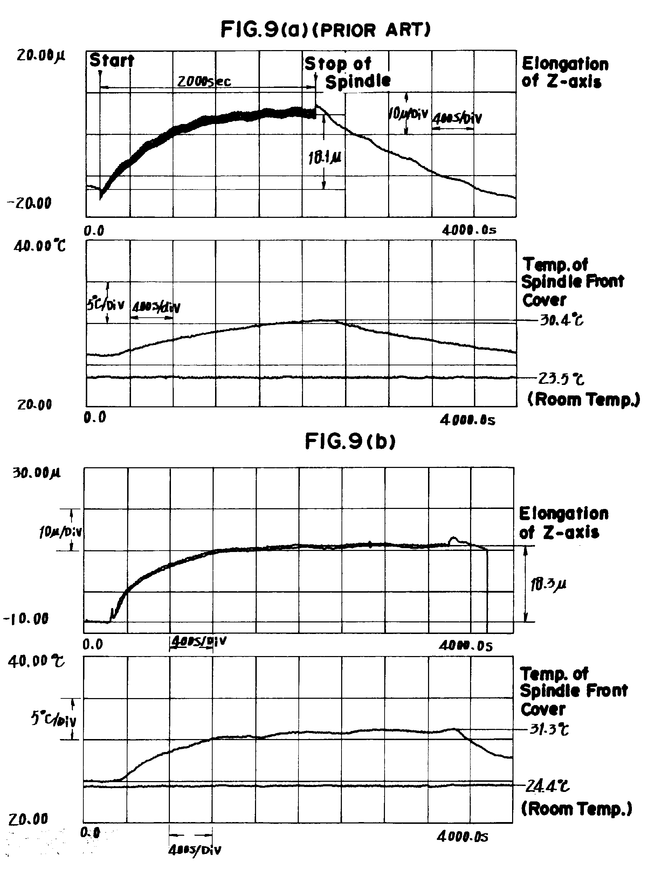

Figure 9(a) indicates that in the prior art spindle unit the longitudinal elongation was 18.1 µ m, and the temperature rise of the front cover was 6.9°C for the main spindle rotating at 12,000 rpm.

Figure 9(b) shows that in a spindle unit including a tool-cramping device according to the invention the longitudinal elongation was 18.3 µ m, and the temperature rise of the front cover was 6.9°C for the main spindle rotating at an extraordinarily high-speed of 30,000 rpm.

Notwithstanding the great difference in rotational speed of 18,000 rpm, the longitudinal elongation and temperature rise of the main spindle of a spindle unit including a tool-cramping device according to the invention remain almost equal to those of the prior art main spindle. The main spindle also shows less thermal expansion in longitudinal direction so that machine precision is stable thereby enabling the high-precision machining at higher speeds.

## Claims

1. A tool-cramping device in a spindle unit for a machine tool having a main spindle (2) rotatably supported in a spindle head (1), the tool-cramping device being of such a structure that a rotary tool (10) is replaceably held by a front end of the main spindle (2), the tool-cramping device comprising: an adapter (8) disposed at the front end of the main spindle (2); a tool holder (12) holding the rotary tool (10); and a columnar lug (9, 9a) formed integral either with the adapter (8) or with the tool holder (12); characterised in that a cylindrical bore (13, 13a) is formed integral either with the tool holder (12) or with the adapter (8) and is to be shrink-fitted on the columnar lug (9, 9a), and a heating means (14) and a cooling means (15) are provided respectively to heat and cool whichever of the tool holder (12) and the adapter (8) comprises the cylindrical bore (13, 13a).

2. A tool cramping device according to claim 1, wherein whichever of the adapter (8) or the tool holder (12) has the cylindrical bore (13, 13a) therein is made of a material having a coefficient of linear expansion higher than that of the material of which the other of the tool holder (12) or the adapter (8) is made.

3. A tool cramping means according to claim 1 or claim 2, wherein the adapter (8) is separable from the main spindle (2) and fixedly fitted on the front end thereof.

4. A tool-cramping device according to any one of claims 1 to 3, wherein the heating means (14) and the cooling means (15) are disposed in the spindle head (1) and in the proximity of the front end of the main spindle (2).

5. A tool-cramping device according to any one of claims 1 to 4, wherein the heating means (14) and the cooling means (15) are disposed in a tool transporter (21, 24) to transport the rotary tool (10).

6. A tool-cramping device according to any one of claims 1 to 5, further comprising a vibrator (23) to impart vibration either to the adapter (8) or to the tool holder (12) when the tool holder (12) is attached to or detached from the adapter (8).

7. A tool-cramping device according to claim 5, further comprising a pressing means (24) provided in the tool transporter and urging the tool holder (12) towards the adapter (8) while the adapter (8) is being engaged with the tool holder (12).

## Patentansprüche

1. Werkzeughaltende bzw. werkzeugfestklemmende Einrichtung in einer Spindeleinheit für eine Werkzeugmaschine mit einer Hauptspindel (2), die drehbar in einem Spindelstock (1) gelagert ist, wobei die werkzeughaltende Einrichtung von einer derartigen Gestalt ist, daß ein drehendes Werkzeug (10) auswechselbar von einem Endteil der Hauptspindel (2) gehalten wird, wobei die werkzeughaltende Einrichtung aufweist: einen an dem Endteil der Hauptspindel (2) angebrachten Adapter (8); einen Werkzeughalter (12), der das drehende Werkzeug (10) hält; und einen säulenförmigen Fortsatz (9, 9a), der entweder mit dem Adapter (8) oder mit dem Werkzeughalter (12) aus einem Stück gebildet ist; dadurch gekennzeichnet, daß eine zylindrische Bohrung (13, 13a) entweder mit dem Werkzeughalter (12) oder mit dem Adapter (8) integral gebildet ist und auf den säulenförmigen Fortsatz (9, 9a) schrumpfzupassen ist; und daß eine Heizeinrichtung (14) und eine Kühleinrichtung (15) vorgesehen sind, um den Werkzeughalter (12) oder den Adapter (8), je nachdem, wer davon die zylindrische Bohrung (13, 13a) aufweist, jeweils zu heizen und zu kühlen.

2. Werkzeughaltende Einrichtung nach Anspruch 1, bei der dasjenige Teil, in dem sich die zylindrische Bohrung (13, 13a) befindet, also entweder der Adapter (8) oder der Werkzeughalter (12), aus einem Material hergestellt wird, dessen linearer Ausdehnungskoeffizient größer ist als der des Materials, aus dem das jeweils andere Teil, also entweder der Werkzeughalter (12) oder der Adapter (8), hergestellt ist.

3. Werkzeughaltende Einrichtung nach Anspruch 1 oder Anspruch 2, bei der der Adapter (8) von der Hauptspindel (2) trennbar ist und und unbewegbar an deren Vorderende befestigt ist.

4. Werkzeughaltende Einrichtung nach einem der Ansprüche 1 bis 3, bei der die Heizeinrichtung (14) und die Kühleinrichtung (15) im Spindelstock (1) und in der Nähe des Vorderendes der Hauptspindel (2) angebracht sind.

5. Werkzeughaltende Einrichtung nach einem der Ansprüche 1 bis 4, bei der die Heizeinrichtung (14) und die Kühleinrichtung (15) in einer Werkzeugtransporteinrichtung (21, 24) zum Transport des drehenden Werkzeuges (10) angebracht sind.

6. Werkzeughaltende Einrichtung nach einem der Ansprüche 1 bis 5, die außerdem einen Vibrator (23) aufweist, um Vibrationen entweder auf den Adapter (8) oder den Werkzeughalter (12) auszuüben, wenn der Werkzeughalter (12) an dem Adapter (8) angebracht oder von diesem entfernt wird.

7. Werkzeughaltende Einrichtung nach Anspruch 5, die außerdem in der Werkzeugtransporteinrichtung Presseinrichtungen (24) aufweist, die den Werkzeughalter (12) gegen den Adapter (8) drücken, während der Adapter (8) in Eingriff mit dem Werkzeughalter gebracht wird.

## Revendications

1. Dispositif de serrage d'outil dans une broche pour machine-outil comportant une broche principale (2) supportée à rotation dans une tête de broche (1), le dispositif de serrage d'outil ayant une structure telle qu'un outil rotatif (10) est maintenu avec possibilité de remplacement par une extrémité avant de la broche principale (2), le dispositif de serrage d'outil comprenant : un adaptateur (8) disposé à l'extrémité avant de la broche principale (2); un porte-outil (12) maintenant l'outil rotatif (10); et une projection en forme de colonne (9, 9a) formée d'un seul tenant avec l'adaptateur (8) ou avec le porte-outil (12); caractérisé en ce qu'un alésage cylindrique (13, 13a) est formé d'un seul tenant avec le porte-outil (12) ou avec l'adaptateur (8) et est destiné à être ajusté serré par retrait sur la projection en forme de colonne (9, 9a), et un moyen de chauffage (14) et un moyen de refroidissement (15) sont prévus respectivement pour chauffer et refroidir celui parmi le porte-outil (12) ou l'adaptateur (8) qui comprend l'alésage cylindrique (13, 13a).

2. Dispositif de serrage d'outil selon la revendication 1, dans lequel celui parmi l'adaptateur (8) ou le porte-outil (12) qui comprend l'alésage cylindrique (13, 13a) en son sein est fait d'un matériau ayant un coefficient de dilatation linéaire supérieur à celui du matériau dont l'autre parmi le porte-outil (12) ou l'adaptateur (8) est fait.

3. Dispositif de serrage d'outil selon la revendication 1 ou 2, dans lequel l'adaptateur (8) est séparable de la broche principale (12) et emboîté fixement sur l'extrémité de celle-ci.

4. Dispositif de serrage d'outil selon l'une quelconque des revendications 1 à 3, dans lequel le moyen de chauffage (14) et le moyen de refroidissement (15) sont disposés dans la tête de broche (1) et à proximité de l'extrémité avant de la broche principale (2).

5. Dispositif de serrage d'outil selon l'une quelconque des revendications 1 à 4, dans lequel le moyen de chauffage (14) et le moyen de refroidissement (15) sont disposés dans un transporteur d'outil (21, 24) pour transporter l'outil rotatif (10).

6. Dispositif de serrage d'outil selon l'une quelconque des revendications 1 à 5, comprenant en outre un vibreur (23) pour communiquer une vibration soit à l'adaptateur (8) soit au porte-outil (12) lorsque le porte-outil (12) est fixé à l'adaptateur (8) ou détaché de l'adaptateur (8).

7. Dispositif de serrage d'outil selon la revendication 5, comprenant en outre un moyen de pression (24) disposé dans le transporteur d'outil et sollicitant le porte-outil (12) vers l'adaptateur (8) tandis que l'adaptateur (8) est engagé avec le porte-outil (12).
